# EUROPEAN PATENT SPECIFICATION

(11) **EP 2 093 916 B1**
(45) Date of publication and mention of the grant of the patent: **14.04.2010**
(21) Application number: 07291468.2
(22) Date of filing: 06.12.2007
(51) Int. Cl.: H04J 3/16, H04J 3/14, H04L 12/56

(54) **Optical transport hierarchy gateway interface**
Gateway-Schnittstelle für Optical Transport Hierarchy
Interface de passerelle pour hiérarchie de transport optique

(43) Date of publication of application: 26.08.2009
(73) Proprietor: Alcatel Lucent, 75008 Paris (FR)
(72) Inventor: Grammel, Gert, 71254 Ditzingen (DE)
(74) Representative: Schmidt, Werner Karl

(56) References cited:
- US-A1- 2003 048 813

## Description

The present invention relates to encapsulating client signals, such as synchronous digital hierarchy (SDH) signals, into Optical Transport Hierarchy signals, such as Optical channel Data Units (ODUk), of an Optical Transport Hierarchy (OTH) network.

Synchronous digital hierarchy is a standard mechanism for communicating digital information using lasers or light-emitting diodes (LEDs) over optical fiber. The SDH standard was developed by the International Telecommunication Union (ITU) and is documented in standard G.707 and its extension G.708. While SDH is used in most countries, for the North American region the SONET or Synchronous Optical Networking standard has been defined. Both standards are very similar and the method and apparatus described in the present invention may be applied to both standards. For reasons of conciseness, the invention will be described focusing on SDH. The disclosed method and apparatus may be applied to various client signals, such as SONET, ATM and/or Ethernet.

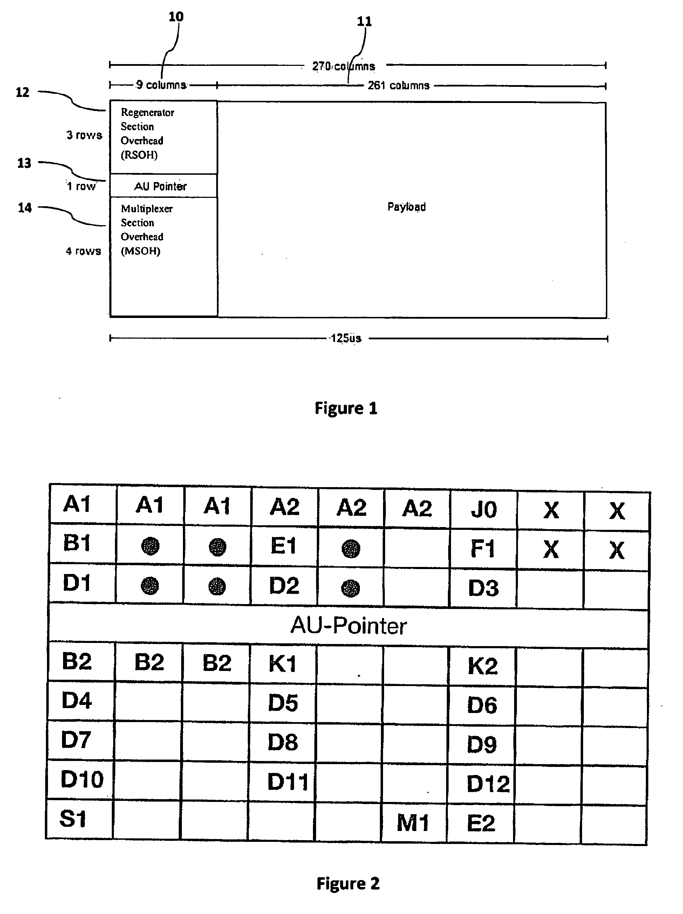

The SDH standard defines frames which are transmitted over an optical network. The basic unit of framing in SDH is an STM-1 (Synchronous Transport Module level - 1), which operates at 155.52 Mbit/s. In SDH a frame consists of a section overhead (SOH) and a payload. Figure 1 shows an STM-1 frame, its section overhead 10 and its payload 11. The section overhead 10 comprises three parts, the Regenerator Section Overhead (RSOH), which contains information about the frame structure required by the terminal equipment, the AU pointer, which points to the beginning of the Administrative Unit (AU) in the payload, and the Multiplex Section Overhead (MSOH), which contains information about alarms, maintenance and error correction as may be required within the network.

A detailed overview of the bytes within the section overhead is illustrated in Figure 2. Each byte, also referred to as channel, has a particular function or service attached to it. In particular, the following bytes are related to functions, such as:
● K1, K2 are used to implement Automatic Protection Switching (APS) also known as Multiplex Section Protection (MSP), as the switching is implemented using bytes from the MSOH;
● D1,.., D3, also known as Regenerator Section Data Communication Channels (RS-DCC), are used for SDH-specific network element management activities;
● D4,..., D12, also known as Multiplex Section Data Communication Channels (MS-DCC), are used for non-SDH-related network element management activities;
● S1 is used for network synchronization.

When transmitting SDH signals over DWDM systems, a transparent transport of the SDH service is required. Such a transparent transport method has been defined in the ITU-T recommendation G.709 and is also known as Optical Transport Hierarchy (OTH). OTH is positioned as a server layer for various client signals, e.g. SDH/SONET, ATM and/or Ethernet. The frame structure defined in G.709 comprises four parts:
1. the optical packet payload unit (OPUk), where the payload is mapped into;
2. the Optical channel Data Unit (ODUk), which contains the OPUk and additional overhead bytes which have particular services and functions attached to them;
3. the optical transport unit (OTUk), which contains the ODUk plus additional framing bytes; and
4. a forward error correction (FEC) code.

It is to be noted that the parameter k represents the line rate of the OTH, i.e. k = 1 stands for approx. 2.6 Gb/s, k = 2 for approx. 10.7 Gb/s and k = 3 for approx. 43 Gb/s. The different ODUs are able to transport STM-16, STM-64 and STM-256 signals, respectively.

The US Patent application US 2003/0048813 discloses a method for mapping and multiplexing of constant bit rate (CBR) signals into optical transport network (OTN) frames is provided. The method, in addition, enables the transportation of data from a plurality of SONET/SDH clients through a single OTN frame. It thereby enables efficient adoption of SONET/SDH legacy equipment by OTN networks.

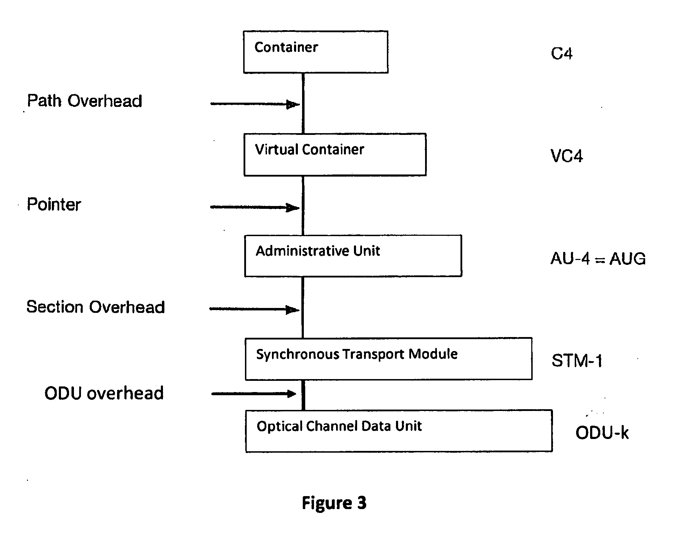

Figure 3 illustrates the encapsulation hierarchy when transporting SDH signals over OTH. Data units, e.g. from ATM signals, are carried in containers. After adding the path overhead (POH), the containers are called virtual containers (VC), in case of STM-1 a VC4. Large virtual containers, i.e. VC3 and VC4, are also referred to as high order virtual containers (HOVC). The AU pointer indicates the beginning of such a VC4 within the STM-1 payload and the combination of AU pointer and VC4 is called an Administrative Unit (AU). After adding the section overhead one obtains the synchronous transport module (STM). As defined in OTH, such STMs may be encapsulated into ODUs by adding the ODU overhead. The mechanism of mapping payload into an ODU is also referred to as User Network Interface (OTH-UNI) or as digital wrapping.

Using certain bytes of the section overhead and also the path overhead, SDH has network capabilities and is able to switch traffic on STM level or on VC level. With the evolution of transport networks from SDH to OTH, OTH becomes the dominant switching technology. G.709 was invented to transport transparently client signals across an optical network. The OTH-UNI interface between SDH and OTH currently defined within the G.709 standard does not allow for networking, such as protection switching. For networking (e.g. multiplex section protection) it is assumed that either the OTH network behaves transparently with respect to the SDH protocol, i.e. it does not participate in the protection, or it is assumed that the OTH Network Element is capable to switch SDH entities, e.g. on VC-3 level, in addition to OTH capabilities like ODU switching. The problem with this approach is, however, that the parallel switching of SDH HOVC and OTH ODU in one network element is quite costly and complex to manage. The complexity further increases for more complex multiplex section protection schemes of SDH, such as 1:1 protection, I:n protection, m:n protection and/or Multiplex Section-Shared Protection Ring (MSSPRing).

Another consideration is the interworking of network elements on the control plane (CP) level. Current CP enabled SDH networks use the DCC channels embedded in the SDH signal to communicate between different network elements and the control plane. In a classical G.709 compliant OTH-UNI implementation, this information would not be accessible by the OTH network elements. By way of example, in an OTH network, it would not be possible to use the DCC in an SDH overhead to communicate bandwidth on demand requests to the network. In prior art implementations, in order to obtain control plane interworking between two OTH network elements, the DCC information needs to be coupled out of the SDH device before being encapsulated into an ODU and transported separately via a digital communication network (DCN) to the adjacent OTH node. This is a fairly complicated solution and requires network extensions and external infrastructure on both sides of the communication link, i.e. on the SDH device and on the adjacent OTH node.

The present invention discloses an OTH gateway method and apparatus, which overcomes the problem of loosing signaling and service capabilities of the client signals encapsulated into ODUk of an OTH network. The invention will be explained on the basis of SDH client signals, but it can be applied in a similar manner to other client signals, such as SONET, ATM and/or Ethernet.

Furthermore, it should be noted that G.709 defines other frame structures than ODUk, such as optical transport modules (OTM), optical transport units (OTU) and optical channels (OCh). The invention will be explained on the basis of ODU encapsulation. It should be noted, however, that it is applicable to OTH signals in general. In addition, G.709 defines means for adding protocol information to the OTH signal not only in the electrical domain, e.g. by adding bytes to a frame overhead, but also in the optical domain, e.g. by modulating an optical channel in a particular way. Consequently, adding information to the overhead of an ODU is only a particular embodiment for the general case of adding information to an OTH signal.
According to an aspect of the invention, a client signal comprising client signal frames is encapsulated into an ODU of an OTH network. In a first step, which will also be referred to as client signal termination step, at least one client signal frame is collected and protocol information is extracted from the overhead of the collected client signal frames. By way of example, the client signal may be an SDH signal and the client signal frames may be STM frames. The protocol information may be bytes from the RSOH and/or MSOH. As meaningful protocol information, such as packets contained in DCC bytes, may be spread over the overheads of multiple STM frames, it may be required to collect multiple STM frames. The OTH gateway may comprise the means to analyze and understand the protocol information and to decide on the number of client signal frames that need to be collected in order to extract meaningful protocol information.

In a second step, which will also be referred to as translating step, the extracted protocol information is translated into information for the overhead of the ODU. By way of example, the extracted protocol information may be a set of bytes extracted from the overhead of a plurality of STM frames, which may be translated into a particular section of the ODU overhead. It is to be noted that the OTH gateway may actively participate in the client signal protocol, thereby analyzing the extracted protocol information of the client signal and translating it into appropriate information for the OTH signal. The OTH gateway may also comprise a memory function, thereby keeping track of the status of the client signal protocol.

In a third step, which will also be referred to as Optical Transport Hierarchy termination step, the collected client signal frames are encapsulated into the ODU including the translated information. Before encapsulating, it may be beneficial to remove the extracted protocol information from the encapsulated client signal frames, in order to avoid ambiguities between the OTH network layer and the client signal network layer. The removed protocol information may be added again when the encapsulated client signal is de-encapsulated by an OTH gateway at the opposite side of the OTH network.

The disclosed method enables an OTH network element to read the translated information from the overhead of the ODU and to take actions relating to the client signal according to the extracted protocol information. It is to be noted that such OTH network elements may be the OTH gateway itself. By way of example, an OTH switch may receive an ODU comprising STM frames. The ODU overhead may comprise translated information based on overhead bytes of the encapsulated STM frames, i.e. based on the extracted protocol information. By reading and analyzing the translated information from the ODU overhead, the ODU switch may take actions, such as multiplex protection switching or network management tasks with respect to the encapsulated STM frames.

As already mentioned above, the ODU is only one possible OTH signal type that a client signal may be encapsulated in. In certain embodiments it may be beneficial to use other types of OTH signals and to include the translated information in other ways. By way of example, certain information may be included by optically modulating an optical channel.

According to another aspect of the invention, an MSP switch for an SDH signal is simulated by an ODU switch thereby simplifying the switch technology. The OTH switch participates in the SDH multiplex section protection protocol. This may be implemented within an OTH gateway. By way of example, depending on the protocol information in the K1/K2 bytes, one or more OTH network elements may participate in an MSSPRing as an SDH network element without local traffic, i.e. in pass through mode. In case of protection, from the point of view of the encapsulated SDH signal, the entire section is switched and, from the point of view of the OTH signal, the ODU is switched.

According to another aspect of the invention, the OTH gateway is also able to participate to the control plane of the SDH client signal, thereby allowing to integrate a solution for common traffic engineering and bandwidth on demand applications as well as for restoration. In other terms, the OTH gateway may participate in the network control protocols of the encapsulated client signal. Consequently, the OTH gateway processes the control plane information and uses the OTH overhead bytes to synchronize both ends of the OTH network. By way of example, in case of bandwidth on demand, a request is sent from an originating SDH network element using the DCC overhead bytes. The OTH gateway determines the said request by terminating the information contained in the collected DCC overhead bytes. By communicating, e.g. via a GMPLS I-NNI protocol, with other OTH network elements in the OTH network, the OTH gateway allocates the requested bandwidth to the originating SDH network element. The OTH gateway at the opposite side of the OTH network inserts protocol information into the DCC overhead in order to inform the SDH network element at the receiving side, that the requested bandwidth has been allocated. Obviously, such a communication is bi-directional and is essential in the context of traffic engineering, such as Resource Reservation Protocol - Traffic Engineering (RSVP-TE).

In other words, the protocol information may be terminated at the OTH gateway and the protocols running within the protocol information are processed. By way of example, the DCC bytes of an SDH signal may contain packets from protocols such as LAPD, RSVP, OSPF and others. The OTH gateway extracts such protocol information and processes the respective protocol. By translating the processed protocol information into information of an OTH signal (e.g. within the GCC bytes), the OTH gateway communicates the processed protocol information to neighboring OTH network elements.

According to another aspect of the invention, the multiplex section overhead of an SDH client signal is terminated at the OTH-UNI interface to the OTH network and participates in the multiplex section protection protocol as initiated by the respective bytes in the MSOH. Then a proper section overhead is re-created before entering in the OTH-UNI, i.e. the digital wrapper. The multiplex section protection itself which is initiated by the respective MSOH bytes is performed on ODU level therefore maintaining switching on a single level.

According to another aspect of the invention, the SDH section overhead bytes, in particular the K1 and/or K2 bytes with regards to multiplex section protection, and the DCC bytes with regards to control plane signaling, are translated into appropriate overhead bytes within an OTH network, such as the Automatic Protection Switching coordination channel (APS) and/or Protection Communication Control channel (PCC) bytes of an ODUk with regards to protection switching and the General Communication Channel (GCC1 and/or GCC2) bytes with respect to control plane signaling.

According to another aspect of the invention, the gateway functionality may be de-activated if desired, thus allowing to let pass the full client signal without touching the overhead and thus using the OTH-UNI as described in G.709.

According to another aspect of the invention, an OTH gateway function is introduced at the OTH-UNI between SDH and OTH. Such an OTH gateway function may be integrated in an SDH and/or OTH network element or it may be implemented as a stand-alone function between an SDH network element and an OTH network element. The OTH gateway terminates the SDH traffic and extracts the section overhead of the SDH frames. The control information contained in the section overhead may be passed to the OTH network element, so that the OTH network element may act according to the control information included within the control information bytes of the section overhead. Furthermore, the OTH gateway may translate control information bytes from the SDH section overhead into related bytes from the ODUk overhead. In particular for multiplex section protection, SDH section overhead K1 and/or K2 bytes may be translated into APS and/or PCC bytes of the ODUk overhead. For SDH control plane signaling, SDH section overhead DCC bytes may be translated into ODUk GCC1 and or GCC2 bytes.

According to another aspect of the invention, the OTH network element may retrieve the said related bytes from the ODUk overhead and perform actions with respect to the encapsulated SDH signal, such as multiplex section protection. Furthermore, the information contained in the said related bytes may be forwarded to an OTH control plane which may take actions with respect to the encapsulated SDH signal, based on the information received.

By way of example, the invention has been disclosed on the basis of SDH as a client signal. It should be noted, that in case of other client signal types, such as Ethernet, the protocol information may not be extracted from an overhead, but rather from a frame header and possibly also a frame payload. Notably link specific information, such as link specific failures could be easily extracted from an Ethernet frame header.

The objects and features of the invention will become apparent from the following description of preferred embodiments. The present invention is described in the following by referring to exemplary embodiments illustrated schematically in the accompanying figures, wherein
Fig. 1 shows the structure of a SDH synchronous transport module;
Fig. 2 shows the naming of bytes of the section overhead of a SDH synchronous transport module;
Fig. 3 shows the hierarchy for encapsulating an SDH signal into an OTH signal;
Fog. 4 shows the structure of an OTH optical channel data unit;
Fig. 5 illustrates an embodiment of an OTH cross-connect network element;
Fig. 6 illustrates an embodiment of an SDH/OTH OTH-UNI within an OTH cross-connect;
Fig.7 illustrates an embodiment of an SDH/OTH OTH-UNI line card and possible OTH gateway activities;
Fig. 8 illustrates an embodiment of OTH gateway activities in the context of 1:1 multiplex section protection; and
Fig. 9 illustrates an embodiment of a network hierarchy involving a tributary service layer, an SDH layer and an OTH layer.

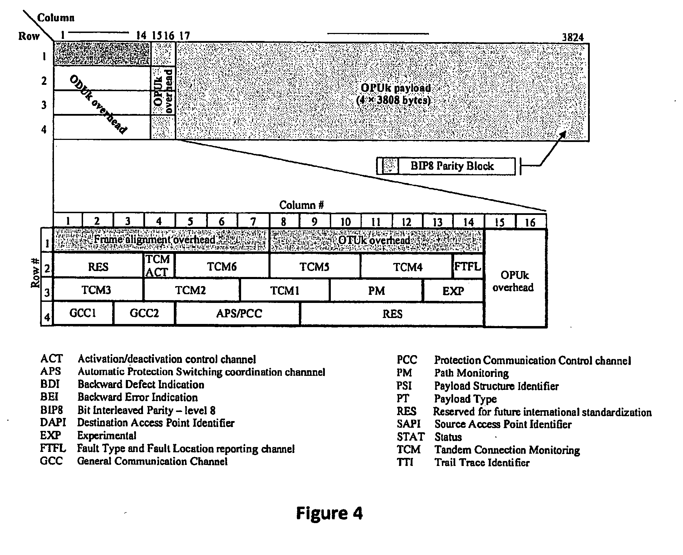

Figures 1 through 3 have already been described in the introduction. Figure 4 shows the ODUk overhead as currently specified by ITU-T G.709. Similar to the overhead bytes known from SDH, the ODUk overhead bytes are used to provide services within an OTH network, such as
● General Communication Channel (GCC1 and GCC2) for providing information or requests to the control plane;
● Automatic Protection Switching coordination channel (APS) and/or Protection Communication Control channel (PCC) for providing switching capabilities at the OTH level;
● Bytes related to signaling faults within an OTH network, such as the Fault Type and Fault Location reporting channel (FTFL).

As already outlined above, within the G.709 specification, these bytes or channels are mainly used for services on the OTH network level. The OTH network is therefore transparent with respect to the client signals, such as SDH.

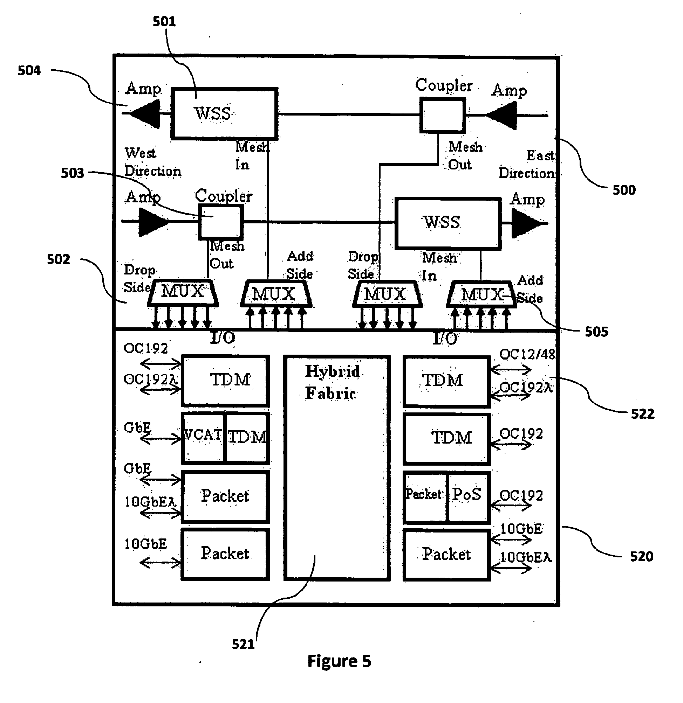

Figure 5 illustrates an embodiment of an OTH cross-connect network element. The upper part of the figure shows the optical layer 500 of the cross-connect, while the lower part shows the logical layer 520. The typical components of an optical cross-connect are shown, such as wavelength selective switching devices (WSS) 501, optical amplifiers 504, optical couplers 503 and add multiplexers 505 as well as drop de-multiplexers 502. The logical layer 520 shows input/output line cards 522 for a plurality of services, such as time division multiplex (TDM) traffic, Ethernet traffic, Packet over SDH (PoS) traffic and others. These line cards are interconnected via a hybrid fabric switching matrix 521.

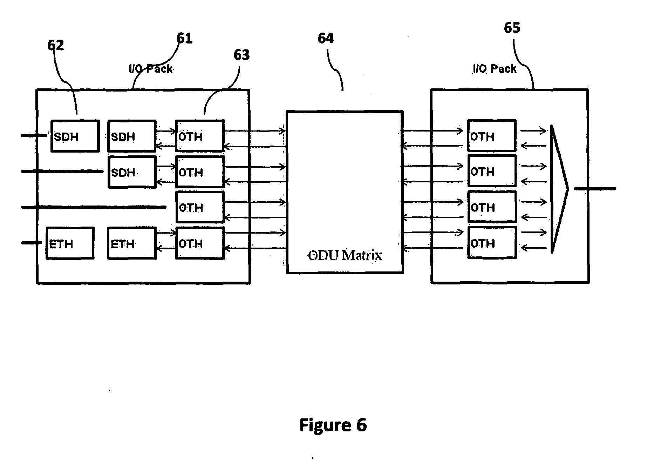

Figure 6 illustrates an embodiment of an OTH cross-connect network element comprising a set 61 of SDH / OTH OTH-UNI line cards. Within each line card, incoming SDH client signals 62, such as STM-1 or STM-16 frames, are encapsulated into OTH signals 63, such as ODU1 frames. These OTH signals 63 are then switched in the OTH layer by means of an ODU matrix 64 and send out via a second set of interface cards 65.

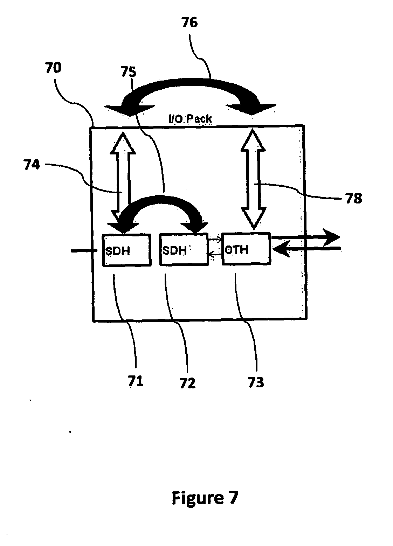

Figure 7 illustrates an embodiment of an SDH/OTH OTH-UNI line card 70 and possible functionalities of the disclosed OTH gateway. According to an embodiment of the invention, before encapsulation the section overhead of an initial SDH signal 71 may be read by the line card 70. Certain bytes or channels of the section overhead may be extracted and kept in memory of the line card 70 for further processing. This is represented by the arrow 74. By way of example, the extracted channels may be the K1, K2 bytes for MSP, the MS-DCC and RS-DCC bytes for control plane signaling, the J0 byte for tracking the sender, and others. After extraction of the channels, a modified SDH signal 72 is re-generated based on the initial SDH signal 71 and a modified section overhead, which is different from the initial section overhead of the initial SDH signal 71 in that the extracted channel information has been removed. This is represented by arrow 75. Then the extracted channels are translated into equivalent ODUk properties, i.e. related channels within the ODUk overhead. This is reflected by the arrow 76. By way of example, such related channels within the ODUk overhead may be the APS and/or PCC bytes for protection and the GCC1 and/or GCC2 bytes for control plane signaling. Finally, the modified SDH signal 72 is encapsulated into an OTH signal 73 using an ODUk overhead which includes the translated extracted channel information. This is represented by the arrow 78.

It is to be noted that the OTH gateway works bi-directionally, meaning that channel information included within the overhead of an OTH signal which relates to an encapsulated SDH signal may be extracted from the ODUk overhead (arrow 78), translated into a related SDH section overhead (arrow 76) and added to the section overhead of the related SDH signal (arrow 74). This is the reason why the arrows 74, 76, 75 and 76 are depicted as bi-directional arrows.

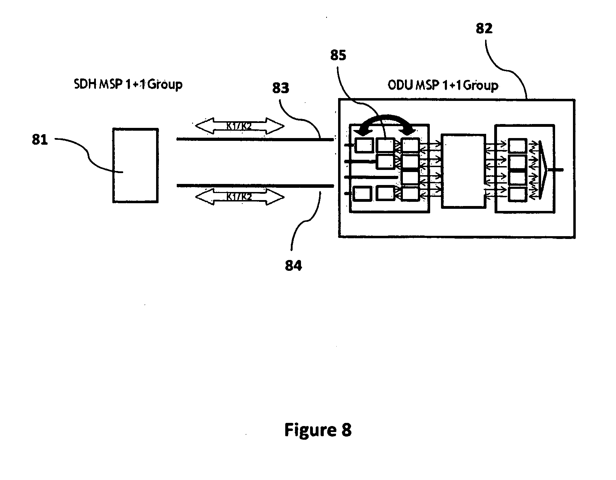

Figure 8 shows an embodiment of an implementation of 1+1 multiplex section protection involving the OTH gateway according to an embodiment of the invention. An SDH cross-connect 81 is interconnected to an OTH cross-connect 82 comprising the disclosed OTH gateway. A working line 83 is complemented by a protection line 84. Information about the protection mechanism is carried in the K1 and/or K2 bytes of the SDH section overhead. In order to make this information available to the OTH network, the K1/K2 bytes are extracted from the section overhead of the SDH frames and translated into related bytes within the ODUk overhead. This-translation is performed by the OTH gateway within the SDH/OTH OTH-UNI line card 85. Consequently, the OTH network is aware that the two lines 83 and 84 are the working line and the protection line, respectively, of the encapsulated SDH signals. Based on this knowledge, the OTH network can make use of the protection switching. In case of a conventional transparent OTH service, the protection switching functionality would have been lost within the OTH network.

By way of example, this mechanism can be used in a similar manner in the context of Ethernet Link Aggregation, where a client and a switch are connected via multiple Ethernet links for higher redundancy. The multiple Ethernet links are referred to as link aggregate group (LAG). Usually the traffic on all the links is balanced, so that if the total traffic between the client and the switch is 1/10Gb/s, and if there are two links on the LAG, the traffic on each link is 500Mb/s or 5Gb/s, respectively. If one link fails, the remaining links take over the communication. For this a hashing function is required at both ends of the communication which relies on MAC address analysis. In an OTH Network of prior art the component links on either side would be connected with a transport entity for each component link and the load-balancing/hashing function would be executed by the client devices at either end.

In an exemplary network, two clients are connected over LAGs via a pair of OTH gateways, whereas the number of links in the LAG, i.e. the available bandwidth, on each side is different for the two clients. Such LAGs cannot be transparently transmitted over a conventional OTH network in prior art. For such asymmetric connections to be transported over an OTH network, it is therefore required that the OTH network element participates in the Ethernet link aggregation protocol. By way of example, when using an OTH gateway, the failure of a component link on one side of the network would invoke a re-hashing on the component side and the OTH gateway side local to the failed component, aiming to balance the load again on the remaining component links. As a consequence the reduced overall bandwidth on said component side is communicated to the OTH gateway on the other side of the network which is then able to limit the traffic on the remote LAG e.g. by applying backpressure mechanisms as defined in Ethernet or by putting component links out of service.

Inversely, the failure of an ODU connection could trigger the OTH gateway to release a set of LAG components on either side or to invoke backpressure mechanisms.

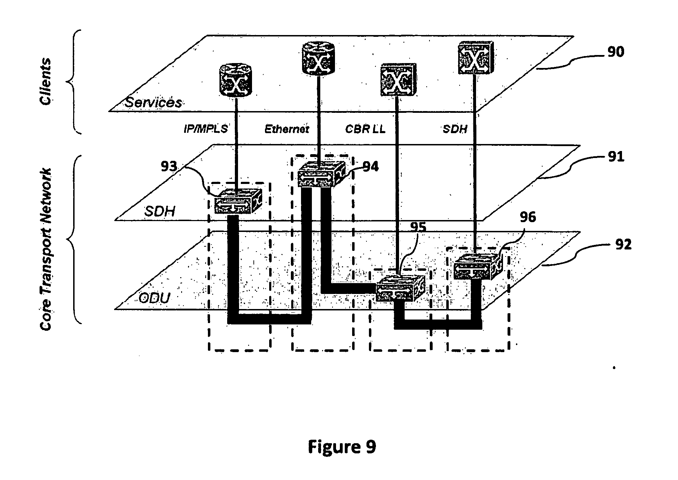

Figure 9 illustrates an embodiment of a multilayer optical transport network with a client layer 90 and a core transport network comprising a SDH network layer 91 and an OTH network layer 92. Within the client layer 90, different services, such as IP/MPLS, Ethernet, CBR leased lines and SDH are made available. The core transport layers show a plurality of network elements. The SDH cross-connects 93 and 94 are interconnected via the OTH network layer 92, however, in a transparent manner, meaning that the SDH layer services are transparently passed through the OTH network layer 92. As such, the interconnection between cross-connects 93 and 94 represents the conventional implementation of the SDH/OTH OTH-UNI. Furthermore, Figure 9 shows two OTH cross-connects 95 and 96 which are interconnected within the OTH network layer 92.

The interconnection between the SDH cross-connect 94 and the OTH cross-connect 95 illustrates the SDH/OTH OTH-UNI interworking as disclosed in the present invention. The direct link between both cross-connects 94 and 95 indicates that there is a communication on the signaling level between the SDH layer 91 and the OTH layer 92. This communication between the two network layers is made possible due to the OTH gateway disclosed in the present invention.

It is apparent from the description of the previous embodiments that using the disclosed OTH gateway, sophisticated networking between OTH signals and client signals is made possible, notably with respect to features such as linear MSP, MSSPRing and GMPLS. The implementation of such networking has been simplified, as due to the OTH gateway, the ODU switching granularity may be kept as the single switching technology. Furthermore, the integration of OTH switches into a client network, e.g. a SDH network, with existing protection schemes may be simplified.

## Claims

1. A method for encapsulating a client signal comprising client signal frames (71) into an Optical Transport Hierarchy signal (73), comprising the step of
- collecting at least one client signal frame (71); wherein the client signal is an SDH signal;
**characterised by**
- extracting (74) protocol information from the at least one collected client signal frame (71); wherein the extracted protocol information are multiplex section protection bytes;
- translating (76) the extracted protocol information into information for an Optical channel Data Unit overhead of the Optical Transport Hierarchy signal (73); wherein the translated information for the Optical channel Data Unit overhead of the Optical Transport Hierarchy signal (73) are automatic protection switching coordination channel and/or protection communication control channel bytes; and
- encapsulating (78) the at least one collected client signal frame (71) into the Optical Transport Hierarchy signal (73) including the translated information;
wherein the translated information in the Optical channel Data Unit overhead enables an Optical Transport Hierarchy network element to perform multiplex section protection of the client signal according to the extracted protocol information contained in the multiplex section protection bytes.

2. The method according to claim 1, wherein after extracting the protocol information from the at least one collected client signal frame (71) the extracted protocol information is removed from the at least one collected client signal frame, thereby creating at least one modified client signal frame (72) which is then encapsulated into the Optical Transport Hierarchy signal (73).

3. A method for de-encapsulating a client signal comprising client signal frames (71) from an Optical Transport Hierarchy signal (73), **characterised by** the steps of
- extracting (78) information related to the at least one encapsulated client signal frame (71) from an Optical channel Data Unit overhead of the Optical Transport Hierarchy signal (73); wherein the client signal is an SDH signal; wherein the information are automatic protection switching coordination channel and for protection communication control channel bytes enabling an OTH network element to perform multiplex section protection of the client signal ;
- translating (76) and writing (74) the extracted information into protocol information for the at least one encapsulated client signal frame (71); wherein the extracted protocol information are multiplex section protection bytes ; and
- de-encapsulating the at least one encapsulated client signal frame (71).

4. An Optical Transport Hierarchy gateway (70) for usage at an interface between a client signal network and an Optical Transport Hierarchy network, comprising
- a client signal termination function (74) for collecting at least one client signal frame (71) of a client signal and for extracting protocol information from the at least one collected client signal frame (71); wherein the client signal network is an SDH network and the client signal is an SDH signal;
**characterised by**
- a translation function (76) for translating the extracted protocol information into information for an Optical channel Data Unit overhead of an Optical Transport Hierarchy signal (73); wherein the extracted protocol information are multiplex section protection bytes; and
- an Optical Transport Hierarchy termination function (78) for encapsulating the at least one collected client signal frame (71) into an Optical Transport Hierarchy signal (73), including said translated information; wherein the translated information for the Optical channel Data Unit overhead of the Optical Transport Hierarchy signal (73) are automatic protection switching coordination channel and/or protection communication control channel bytes;
wherein said translated information in the Optical channel Data Unit overhead enables an Optical Transport Hierarchy network element to perform multiplex section protection of the client signal according to the extracted protocol information contained in the multiplex section protection bytes.

5. An Optical Transport Hierarchy network comprising
a control plane and at least one Optical Transport Hierarchy network element comprising a switching matrix (64); and at least one Optical Transport Hierarchy gateway (70) according to claim 4;
wherein said switching matrix (64) and/or control plane are operable to perform multiplex section protection of the client signal according to the extracted protocol information.

6. An Optical Transport Hierarchy signal (73) for use within an Optical Transport Hierarchy network, the signal (73) being obtainable by performing the method of claim 1.

## Patentansprüche

1. Ein Verfahren zum Einkapseln eines Client-Signals mit Client-Signalrahmen (71) in ein Optical Transport Hierarchy-Signal (73), wobei das Verfahren die folgenden Schritte umfasst:
- Erfassen mindestens eines Client-Signalrahmens (71); wobei das Client-Signal ein SDH-Signal ist;
**gekennzeichnet durch**
- Extrahieren (74) von Protokollinformationen aus dem mindestens einen erfassten Client-Signalrahmen (71); wobei die extrahierten Protokollinformationen Multiplexabschnittsschutz-Bytes sind;
- Übersetzen (76) der extrahierten Protokoll-Informationen in Informationen für einen optischen Kanaldateneinheiten-Overhead des Optical Transport Hierarchy-Signals (73); wobei die übersetzten Informationen für den optischen Kanaldateneinheiten-Overhead des Optical Transport Hierarchy-Signals (73) automatische Schutzschaltungskoordinationskanal- und/oder Schutzkommunikationssteuerkanal-Bytes sind, und
- Einkapseln (78) des mindestens einen erfassten Client-Signalrahmens (71) in das Optical Transport Hierarchy-Signal (73) einschließlich der übersetzten Informationen;
wobei die übersetzten Informationen im optischen Kanaldateneinheiten-Overhead ein Optical Transport Hierarchy-Netzwerkelement befähigt, einen Multiplexabschnittsschutz des Client-Signals gemäß den extrahierten Protokollinformationen, welche in den Multiplexabschnittsschutz-Bytes enthalten sind, durchzuführen.

2. Das Verfahren nach Anspruch 1, wobei, nachdem die Protokollinformationen aus dem mindestens einen erfassten Client-Signalrahmen (71) extrahiert wurden, die extrahierten Protokollinformationen aus dem mindestens einen erfassten Client-Signalrahmen entfernt werden und so mindestens ein geänderter Client-Signalrahmen (72) entsteht, der anschließend in das Optical Transport Hierarchy-Signal (73) eingekapselt wird.

3. Ein Verfahren zum Entkapseln eines Client-Signals einschließlich der Client-Signalrahmen (71) aus einem Optical Transport Hierarchy-Signal (73), **gekennzeichnet durch** die folgenden Schritte:
- Extrahieren (78) der sich auf den mindestens einen eingekapselten Client-Signalrahmen (71) beziehenden Informationen aus einem optischen Kanaldateneinheiten-Overhead des Optical Transport Hierarchy-Signals (73); wobei das Client-Signal ein SDH-Signal ist; wobei die Informationen automatische Schutzschaltungskoordinationskanal- und/oder Schutzkommunikationssteuerkanal-Bytes sind, welche ein OTH-Netzwerkelement befähigen, einen Multiplexabschnittsschutz des Client-Signals durchzuführen;
- Übersetzen (76) und Schreiben (74) der extrahierten Informationen in Protokollinformationen für den mindestens einen eingekapselten Client-Signalrahmen (71), wobei die extrahierten Protokollinformation Multiplexabschnittsschutz-Bytes sind; und
- Entkapseln des mindestens einen eingekapselten Client-Signalrahmens (71).

4. Ein Optical Transport Hierarchy-Gateway (70) zur Verwendung an einer Schnittstelle zwischen einem Client-Signalnetzwerk und einem Optical Transport Hierarchy-Netzwerk, umfassend:
- Eine Client-Signal-Terminierungsfunktion (74) für die Erfassung mindestens eines Client-Signalrahmens (71) eines Client-Signals und für das Extrahieren der Protokollinformationen aus dem mindestens einen erfassten Client-Signalrahmen; wobei das Client-Signalnetzwerk ein SDH-Netzwerk und das Client-Signal ein SDH-Signal ist;
**gekennzeichnet durch**:
- Eine Übersetzungsfunktion (76) zum Übersetzen der extrahierten Protokollinformationen in Informationen für einen optischen Kanaldateneinheiten-Overhead eines Optical Transport Hierarchy-Signals (73), wobei die extrahierten Protokollinformationen Multiplexabschnittsschutz-Bytes sind; und
- eine Optical Transport Hierarchy-Terminierungsfunktion (78) zum Einkapseln des mindestens einen erfassten Client-Signalrahmens (71) in ein Optical Transport Hierarchy-Signal (73), einschließlich der besagten übersetzten Informationen, wobei die übersetzten Informationen für den optischen Kanaldateneinheiten-Overhead des Optical Transport Hierarchy-Signals (73) automatische Schutzschaltungskoordinationskanal- und/oder Schutzkommunikationssteuerkanal-Bytes sind;
wobei die besagten übersetzten Informationen im optischen Kanaldateneinheiten Overhead ein Optical Transport Hierarchy-Netzwerkelement befähigt, einen Multiplexabschnittsschutz des Client-Signals gemäß den extrahierten in den Multiplexabschnittsschutz-Bytes enthaltenen Protokollinformationen durchzuführen.

5. Ein Optical Transport Hierarchy-Netzwerk, umfassend:
Eine Steuerebene und mindestens ein Optical Transport Hierarchy-Netzwerkelement, welches eine Schaltmatrix (64) umfasst; und mindestens ein Optical Transport Hierarchy-Gateway (70) nach Anspruch 4;
wobei die besagte Schaltmatrix (64) und/oder die besagte Steuerebene dazu ausgelegt sind, einen Multiplexabschnittsschutz des Client-Signals gemäß den extrahierten Protokollinformationen durchzuführen.

6. Ein Optical Transport Hierarchy-Signal (73) zur Verwendung in einem Optical Transport Hierarchy-Netzwerk, wobei das Signal (73) durch das Ausführen des Verfahrens nach Anspruch 1 erhalten wird.

## Revendications

1. Procédé d'encapsulation d'un signal client comprenant des trames de signal client (71) dans un signal hiérarchique de transport optique (73), comprenant les étapes suivantes :
- collecte d'au moins une trame de signal client (71) ; dans lequel le signal client est un signal SDH ; **caractérisé par** :
- l'extraction (74) d'informations de protocole de l'au moins une trame de signal client collectée (71) ; dans lequel les informations de protocole extraites sont des octets de protection de section de multiplexage ;
- la traduction (76) des informations de protocole extraites en informations pour un surdébit d'unité de données de voie optique du signal hiérarchique de transport optique (73) ; dans lequel les informations traduites pour le surdébit d'unité de données de voie optique du signal hiérarchique de transport optique (73) sont des octets de voie de coordination de commutation de protection automatique et/ou de voie de commande de communication de protection, et
- l'encapsulation (78) de l'au moins une trame de signal client collectée (71) dans le signal hiérarchique de transport optique (73) comprenant les informations traduites ;
dans lequel les informations traduites dans le surdébit d'unité de données de voie optique active un élément de réseau hiérarchique de transport optique pour effectuer une protection de section de multiplexage du signal client conformément aux informations de protocole extraites contenues dans les octets de protection de section de multiplexage.

2. Procédé selon la revendication 1, dans lequel après l'extraction des informations de protocole de l'au moins une trame de signal client collectée (71), les informations de protocole extraites sont retirées de l'au moins une trame de signal client collectée, créant ainsi au moins une trame de signal client modifiée (72) qui est ensuite encapsulée dans le signal hiérarchique de transport optique (73).

3. Procédé de désencapsulation d'un signal client comprenant des trames de signal client (71) d'un signal hiérarchique de transport optique (73), comprenant les étapes suivantes :
- extraction (78) des informations relatives à l'au moins une trame de signal client encapsulée (71) d'un surdébit d'unité de données de voie optique du signal hiérarchique de transport optique (73) ; dans lequel le signal client est un signal SDH ; dans lequel les informations sont des octets de voie de coordination de commutation de protection automatique et/ou de voie de commande de communication de protection activant un élément de réseau OTH pour effectuer une protection de section de multiplexage du signal client ;
- traduction (76) et écriture (74) des informations extraites en informations de protocole pour l'au moins une trame de signal client encapsulée (71) ; dans lequel les informations de protocole extraites sont des octets de protection de section de multiplexage ; et
- désencapsulation de l'au moins une trame de signal client encapsulée (71).

4. Passerelle hiérarchique de transport optique (70) à utiliser sur une interface entre un réseau de signal client et un réseau hiérarchique de transport optique, comprenant :
- une fonction de terminaison de signal client (74) pour collecter au moins une trame de signal client (71) d'un signal client et pour extraire des informations de protocole de l'au moins une trame de signal client collectée (71) ; dans lequel le réseau de signal client est un réseau SDH et le signal client est un signal SDH ;
**caractérisé par** :
- une fonction de traduction (78) pour traduire les informations de protocole extraites en informations pour un surdébit d'unité de données de voie optique d'un signal hiérarchique de transport optique (73) ; dans lequel les informations de protocole extraites sont des octets de protection de section de multiplexage ; et
- une fonction de terminaison hiérarchique de transport optique (78) pour encapsuler l'au moins une trame de signal client collectée (71) dans un signal hiérarchique de transport optique (73), comprenant lesdites informations traduites, dans lequel les informations traduites pour le surdébit d'unité de données de voie optique du signal hiérarchique de transport optique (73) sont des octets de voie de coordination de commutation de protection automatique et/ou de voie de commande de communication de protection ;
dans lequel lesdites informations traduites dans le surdébit d'unité de données de voie optique activent un élément de réseau hiérarchique de transport optique pour effectuer une protection de section de multiplexage du signal client conformément aux informations de protocole extraites contenues dans les octets de protection de section de multiplexage.

5. Réseau hiérarchique de transport optique, comprenant :
un gestionnaire de réseau et au moins un élément de réseau hiérarchique de transport optique comprenant une matrice de commutation (64) ; et au moins une passerelle hiérarchique de transport optique (70) selon la revendication 4 ;
dans lequel ladite matrice de commutation (64) et/ou ledit gestionnaire de réseau peuvent fonctionner pour effectuer une protection de section de multiplexage du signal client conformément aux informations de protocole extraites.

6. Signal hiérarchique de transport optique (73) à utiliser dans un réseau hiérarchique de transport optique, le signal (73) pouvant être obtenu en réalisant le procédé selon la revendication 1.
